# EUROPEAN PATENT APPLICATION

(11) **EP 4 674 912 A1**
(43) Date of publication of application: **07.01.2026**
(21) Application number: 24763816.6
(22) Date of filing: 26.02.2024
(51) Int. Cl.: C08L 77/00, C08L 53/02, C08L 57/02

(54) **THERMOPLASTIC ELASTOMER COMPOSITION AND MOLDED ARTICLE**

(30) Priority: 28.02.2023 JP 2023029050; 28.02.2023 JP 2023029051; 28.02.2023 JP 2023029053; 31.07.2023 JP 2023123975; 31.07.2023 JP 2023123976; 31.07.2023 JP 2023123977
(71) Applicant: Toray Industries, Inc., Tokyo 103-8666 (JP)
(72) Inventor: SUZUKI Shota, Nagoya-shi, Aichi 455-8502 (JP); OCHIAI Shinichiro, Nagoya-shi, Aichi 455-8502 (JP); KOBAYASHI Sadayuki, Nagoya-shi, Aichi 455-8502 (JP)
(74) Representative: Mewburn Ellis LLP
(86) International application number: PCT/JP2024/006722
(87) International publication number: WO 2024/181336

(57) **Abstract**

A thermoplastic elastomer composition containing a polyamide resin (A) and a thermoplastic elastomer (B) blended, in which the thermoplastic elastomer composition has a loss tangent of 0.10 or more at a frequency of 100 Hz and a temperature of 23°C, and a melting point of 200°C or more by differential scanning calorimetry (DSC). Provided is a thermoplastic elastomer composition that can be easily molded, is excellent in vibration damping properties, spinnability, high-temperature rigidity, and blocking resistance, and can be used as a sound-absorbing material or a vibration damping material in a severe temperature environment.

## Description

### TECHNICAL FIELD

The present invention relates to a thermoplastic elastomer composition containing a polyamide resin (A) and a thermoplastic elastomer (B) blended, and a molded article using the same.

### BACKGROUND ART

Conventionally, as a polymer material having flexibility, a material obtained by blending a cross-linking agent, a reinforcing agent, or the like into rubbers such as natural rubber or synthetic rubber and cross-linking the blend under a high temperature and a high pressure is generally used. However, such rubbers require a step of performing cross-linking and molding under a high temperature and a high pressure for a long period of time, and have a problem of poor processability. Since the cross-linked rubber does not exhibit thermoplasticity, generally, it is not possible to perform recycle molding like a thermoplastic resin. Therefore, in recent years, various thermoplastic elastomers capable of easily producing a molded article using general-purpose melt-molding techniques such as injection molding, hot press molding, and extrusion molding in the same manner as in usual thermoplastic resins have been developed.

Patent Document 1 discloses, as a thermoplastic resin composition having a good balance between rigidity and impact resistance, a modified conjugated diene polymer having at least one group selected from the group consisting of an alkoxysilyl group, an amino group, an acid anhydride group, and a carboxyl group, and a thermoplastic resin composition containing a polar resin as a main component.

### PRIOR ART DOCUMENT

### PATENT DOCUMENT

Patent Document 1: Japanese Patent Laid-open Publication No. 2006-291117

### SUMMARY OF THE INVENTION

### PROBLEMS TO BE SOLVED BY THE INVENTION

However, the example specifically disclosed in Patent Document 1 is a resin composition containing a diene copolymer having a reactive functional group and polyamide 6, but the loss tangent of the resin composition at 23°C is low, and excellent vibration damping properties cannot be obtained, and the resin composition is insufficient for use as a sound-absorbing material or a vibration damping material.

An object of the present invention is to provide a thermoplastic elastomer composition that can be easily molded and can be used as a sound-absorbing material or a vibration damping material in a severe temperature environment.

### SOLUTIONS TO THE PROBLEMS

In order to solve the problems described above, the present invention includes the following configurations.
(1) A thermoplastic elastomer composition containing a polyamide resin (A) and a thermoplastic elastomer (B) blended, in which the thermoplastic elastomer composition has a loss tangent of 0.10 or more at a frequency of 100 Hz and a temperature of 23°C, and a melting point of 200°C or more by differential scanning calorimetry (DSC).
(2) The thermoplastic elastomer composition according to (1), in which a weight ratio of the polyamide resin (A) and the thermoplastic elastomer (B) contained in the thermoplastic elastomer composition is (A) : (B) = 40 : 60 to 90 : 10.
(3) The thermoplastic elastomer composition according to (1) or (2), in which the polyamide resin (A) is a polyamide resin (A1) having a melting point of 200°C or more by differential scanning calorimetry (DSC).
(4) The thermoplastic elastomer composition according to any one of (1) to (3), in which the thermoplastic elastomer (B) is at least one selected from a copolymer (B1) having a reactive functional group containing a polymer block mainly composed of an aromatic vinyl compound and a polymer block mainly composed of a conjugated diene compound and/or a hydrogenated compound thereof and a copolymer (B2), which is different from component (B1), containing a polymer block mainly composed of an aromatic vinyl compound and a polymer block mainly composed of a conjugated diene compound and/or a hydrogenated compound thereof.
(5) The thermoplastic elastomer composition according to any one of (1) to (3), in which the thermoplastic elastomer composition is a thermoplastic elastomer composition obtained by blending a polyamide resin (A1) having a melting point of 200°C or more by differential scanning calorimetry (DSC), a copolymer (B1) having a reactive functional group containing a polymer block mainly composed of an aromatic vinyl compound and a polymer block mainly composed of a conjugated diene compound and/or a hydrogenated compound thereof, and a copolymer (B2-1), which is different from component (B1), containing a polymer block mainly composed of an aromatic vinyl compound and a polymer block mainly composed of a conjugated diene compound and/or a hydrogenated compound thereof, and having a glass transition temperature more than -20°C, and a weight ratio of the polyamide resin (A1), the copolymer (B1), and the copolymer (B2-1) contained in the thermoplastic elastomer composition is (A1) : (B1) = 50 : 50 to 80 : 20, (B1) : (B2-1) = 90 : 10 to 25 : 75, and (A1) : ((B1) + (B2-1)) = 40 : 60 to 70 : 30.
(6) The thermoplastic elastomer composition according to (5), further containing a hydrogenated petroleum resin (C), in which a content of the hydrogenated petroleum resin (C) is 0.01 to 20 parts by weight with respect to 100 parts by weight of a total of the polyamide resin (A1), the copolymer (B1), and the copolymer (B2-1).
(7) The thermoplastic elastomer composition according to any one of (1) to (3), in which the thermoplastic elastomer composition is a thermoplastic elastomer composition obtained by blending a polyamide resin (A1) having a melting point of 200°C or more by differential scanning calorimetry (DSC), a copolymer (B1) having a reactive functional group containing a polymer block mainly composed of an aromatic vinyl compound and a polymer block mainly composed of a conjugated diene compound and/or a hydrogenated compound thereof, and a hydrogenated petroleum resin (C), a weight ratio of the polyamide resin (A1) and the copolymer (B1) contained in the thermoplastic elastomer composition is (A1) : (B1) = 50 : 50 to 90 : 10, and a content of the hydrogenated petroleum resin (C) is 0.01 to 20 parts by weight with respect to 100 parts by weight of a total of the polyamide resin (A1) and the copolymer (B1).
(8) The thermoplastic elastomer composition according to any one of (1) to (3), in which the thermoplastic elastomer composition is a thermoplastic elastomer composition obtained by blending a polyamide resin (A1) having a melting point of 200°C or more by differential scanning calorimetry (DSC), a copolymer (B1-1), which has a reactive functional group and has a glass transition temperature of -40°C or less, containing a polymer block mainly composed of an aromatic vinyl compound and a polymer block mainly composed of a conjugated diene compound and/or a hydrogenated compound thereof, a copolymer (B2-2) containing a polymer block mainly composed of an aromatic vinyl compound and a polymer block mainly composed of a conjugated diene compound and/or a hydrogenated compound thereof other than the component (B1-1), and having a glass transition temperature of -20°C or less, and a hydrogenated petroleum resin (C), a weight ratio of the polyamide resin (A1), the copolymer (B1-1), and the copolymer (B2-2) is (A1) : (B1-1) = 50 : 50 to 80 : 20, (B1-1) : (B2-2) = 90 : 10 to 25 : 75, and (A1) : ((B1-1) + (B2-2)) = 40 : 60 to 65 : 35, and a content of the hydrogenated petroleum resin (C) is 0.01 to 20 parts by weight with respect to 100 parts by weight of a total of the polyamide resin (A1), the copolymer (B1-1), and the copolymer (B2-2).
(9) The thermoplastic elastomer composition according to any one of (4) to (8), in which the polymer block mainly composed of a conjugated diene compound and/or the hydrogenated compound thereof is a polymer block derived from at least one selected from isoprene, butadiene, ethylene-butylene, and ethylene-propylene.
(10) A molded article containing the thermoplastic elastomer composition according to any one of (1) to (9).
(11) The molded article according to (10), which is a sound-absorbing material.
(12) The molded article according to (10), which is a vibration damping material.
(13) The molded article according to any one of (10) to (12), in which the molded article is a molded article selected from an injection molded article, a fiber, a sheet, a foamed injection molded article, and a foam sheet.

### EFFECTS OF THE INVENTION

The thermoplastic elastomer composition of the present invention is excellent in vibration damping properties and high-temperature rigidity. The thermoplastic elastomer composition of the present invention is excellent in spinnability, film formability, and blocking resistance, and can be easily molded using a general-purpose melt-molding technique. The thermoplastic elastomer composition of the present invention can be developed for, for example, automobile use applications, electric and electronic use applications, and the like.

### EMBODIMENTS OF THE INVENTION

Hereinafter, the present invention will be described in more detail.

The present invention is a thermoplastic elastomer composition containing a polyamide resin (A) and a thermoplastic elastomer (B) blended, in which the thermoplastic elastomer composition has a loss tangent of 0.10 or more at a frequency of 100 Hz and a temperature of 23°C, and a melting point of 200°C or more by differential scanning calorimetry (DSC).

The polyamide resin (A) is not particularly limited, but can be generally obtained using an amino acid, a lactam, or a diamine and a dicarboxylic acid as main raw materials. Typical examples of the raw materials include amino acids such as 6-aminocaproic acid, 11-aminoundecanoic acid, 12-aminododecanoic acid, and p-aminomethylbenzoic acid; lactams such as ε-caprolactam and w-laurolactam; aliphatic diamines such as tetramethylenediamine, pentamethylenediamine, hexamethylenediamine, 2-methylpentamethylenediamine, undecamethylenediamine, dodecamethylenediamine, 2,2,4-/2,4,4-trimethylhexamethylenediamine, and 5-methylnonamethylenediamine; aromatic diamines such as m-xylenediamine and p-xylylenediamine; alicyclic diamines such as 1,3-bis(aminomethyl) cyclohexane, 1,4-bis(aminomethyl) cyclohexane, 1-amino-3-aminomethyl-3,5,5-trimethylcyclohexane, bis(4-aminocyclohexyl) methane, bis(3-methyl-4-aminocyclohexyl) methane, 2,2-bis(4-aminocyclohexyl) propane, bis(aminopropyl) piperazine, and aminoethylpiperazine; aliphatic dicarboxylic acids such as adipic acid, suberic acid, azelaic acid, sebacic acid, and dodecanedioic acid; aromatic dicarboxylic acids such as terephthalic acid, isophthalic acid, 2-chloroterephthalic acid, 2-methylterephthalic acid, 5-methylisophthalic acid, 5-sodium sulfoisophthalic acid, hexahydroterephthalic acid, and hexahydroisophthalic acid; and alicyclic dicarboxylic acids such as 1,4-cyclohexanedicarboxylic acid, 1,3-cyclohexanedicarboxylic acid, 1,2-cyclohexanedicarboxylic acid, and 1,3-cyclopentanedicarboxylic acid. In the present invention, a polyamide homopolymer or copolymer derived from a raw material as described above can be used. Two or more of such polyamide resins may be used.

The polyamide resin (A) used in the present invention is preferably a polyamide resin (A1) having a melting point of 200°C or more by DSC.

Specific examples of the polyamide resin (A1) preferably used in the present invention include polycaproamide (polyamide 6), polyhexamethylene adipamide (polyamide 66), polytetramethylene adipamide (polyamide 46), polyhexamethylene sebacamide (polyamide 610), polyhexamethylene dodecamide (polyamide 612), polyhexamethylene terephthalamide/polycaproamide copolymer (polyamide 6T/6), polyhexamethylene adipamide/polyhexamethylene terephthalamide copolymer (polyamide 66/6T), polyhexamethylene adipamide/polyhexamethylene isophthalamide copolymer (polyamide 66/6I), polyhexamethylene adipamide/polyhexamethylene terephthalamide/polyhexamethylene isophthalamide copolymer (polyamide 66/6T/6I), polyhexamethylene terephthalamide/polyhexamethylene isophthalamide copolymer (polyamide 6T/6I), polyhexamethylene terephthalamide/poly(2-methylpentamethylene)terephthalamide copolymer (polyamide 6T/M5T), polyxylylene adipamide (polyamide XD6), and mixtures or copolymers thereof. Particularly preferable examples thereof include polyamide 6, polyamide 610, and polyamide 66, and more preferable examples thereof include polyamide 6.

The melting point of the polyamide resin (A1) by DSC in the present invention can be determined by the following method. First, two-point fairness (indium, lead) and baseline subtraction are performed using a differential scanning calorimeter (DSC-7 manufactured by PerkinElmer, Inc.). A sample of a polyamide resin in an amount of 8 to 10 mg is weighed, the sample is heated at a temperature increase rate of 20°C/min, and a melting endothermic peak observed in a heating process is defined as a melting point.

When the melting point of the polyamide resin (A1) is less than 200°C, the high-temperature rigidity of the thermoplastic elastomer composition of the present invention is reduced, and thus the melting point of the polyamide resin (A1) is more preferably 205°C or more and still more preferably 210°C or more.

On the other hand, the upper limit of the melting point of the polyamide resin (A1) is not particularly limited, and is preferably 350°C or less because decomposition of the thermoplastic elastomer (B) is suppressed and mechanical characteristics tend not to be deteriorated, and more preferably 320°C or less and still more preferably 300°C or less.

Examples of means for setting the melting point of the polyamide resin (A1) in the above range include a method of selecting a polyamide resin having a desired melting point from polyamide resins having different melting points, and a method of adjusting a degree of polymerization, a copolymerization ratio, and the like of the polyamide resin.

The degree of polymerization of the polyamide resin (A) is not particularly limited, but the polyamide resin (A) preferably has a relative viscosity of 1.5 to 7.0, as measured at 25°C in a 98% concentrated sulfuric acid solution having a resin concentration of 0.01 g/ml. When the relative viscosity is 1.5 or more, the melt viscosity of the thermoplastic elastomer composition during molding is moderately increased, so that air entrapment during molding can be suppressed to further improve moldability. On the other hand, when the relative viscosity is 7.0 or less, the melt viscosity of the thermoplastic elastomer composition during molding is moderately lowered, and moldability can be further improved.

The amount of an amino terminal group of the polyamide resin (A) is not particularly limited, but is preferably in a range of 1.0×10⁻⁵ to 12.0×10⁻⁵ mol/g. When the amount of the amino terminal group is in a range of 1.0×10⁻⁵ to 12.0×10⁻⁵ mol/g, a sufficient degree of polymerization can be obtained and the mechanical strength of a molded article can be improved. Here, the amount of the amino terminal group of the polyamide resin (A) can be determined by dissolving the polyamide resin (A) in a mixed solvent of phenol and ethanol (83.5 : 16.5 (volume ratio)) and titrating the resulting solution using a 0.02 N aqueous hydrochloric acid solution.

Examples of the thermoplastic elastomer (B) used in the present invention include olefin resins, acrylic rubber, silicone rubber, fluorine rubber, nitrile rubber, vinyl rubber, urethane rubber, styrene elastomers, polyamide elastomers, polyester elastomers, and ionomers. Two or more of these may be blended.

Among these, styrene elastomers are preferably used because these are excellent in solubility with the polyamide resin (A) and have a high vibration damping property improving effect. The styrene elastomer is preferably at least one selected from a copolymer (B1) having a reactive functional group containing a polymer block mainly composed of an aromatic vinyl compound and a polymer block mainly composed of a conjugated diene compound and/or a hydrogenated compound thereof (hereinafter, abbreviated as the copolymer (B1) in some cases), and a copolymer (B2), which is different from component (B1), containing a polymer block mainly composed of an aromatic vinyl compound and a polymer block mainly composed of a conjugated diene compound and/or a hydrogenated compound thereof (hereinafter, abbreviated as the copolymer (B2) in some cases).

The polymer block mainly composed of an aromatic vinyl compound is a polymer block composed of 60 wt% or more, preferably 70 wt% or more, and more preferably 80 wt% or more of a unit derived from an aromatic vinyl compound among units constituting the polymer block.

Examples of the aromatic vinyl compound include styrene, α-methylstyrene, β-methylstyrene, o-methylstyrene, m-methylstyrene, p-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, styrene derivatives substituted with a silyl group, indene, and vinylnaphthalene. Among them, styrene, α-methylstyrene, or a mixture thereof is preferable from the viewpoint of industrial availability and glass transition temperature.

The polymer block mainly composed of a conjugated diene compound is a polymer block composed of 60 wt% or more, preferably 70 wt% or more, and more preferably 80 wt% or more of a unit derived from a conjugated diene compound among units constituting the polymer block.

Examples of the conjugated diene compound include butadiene, isoprene, 1,3-pentadiene, 2,3-dimethyl-1,3-butadiene, 1,3-hexadiene, and hydrogenated compounds thereof. One or two or more of these are selected and used.

One or more selected from isoprene, butadiene, ethylene-butene which is a hydrogenated compound of butadiene, and ethylene-propylene which is a hydrogenated compound of isoprene are preferable.

The ratio of the polymer block mainly composed of an aromatic vinyl compound and the polymer block mainly composed of a conjugated diene compound constituting the copolymer (B1) is not particularly limited, but from the viewpoint of loss tangent, the content of the polymer block mainly composed of an aromatic vinyl compound in the copolymer (B1) is preferably 10 to 70 wt%. When the content of the polymer block mainly composed of an aromatic vinyl compound is 10 wt% or more, sufficient mechanical properties are exhibited, and when the content thereof is 70 wt% or less, the loss tangent can be increased.

The molecular weight of the copolymer (B1) is not particularly limited, but is preferably 5,000 to 400,000 and more preferably 10,000 to 200,000 in terms of weight-average molecular weight by gel permeation chromatography (GPC) measurement from the viewpoint of molding processability, fluidity, elastomeric properties, and the like. When the weight-average molecular weight is 5,000 or more, sufficient mechanical properties are exhibited. On the other hand, when the weight-average molecular weight is 400,000 or less, processability and fluidity of a molded article are excellent.

The reactive functional group in the copolymer (B1) is not particularly limited, but examples thereof include at least one selected from an amino group, a carboxyl group, a carboxyl metal salt, a hydroxyl group, an acid anhydride group, an epoxy group, an isocyanate group, a mercapto group, an oxazoline group, a sulfonic acid group, and the like. Among them, at least one selected from an amino group, a carboxyl group, a carboxyl metal salt, an epoxy group, an acid anhydride group, and an oxazoline group is preferably used because it has high reactivity and has few side reactions such as decomposition and cross-linking.

Examples of the acid anhydride constituting the acid anhydride group described above include maleic anhydride, itaconic anhydride, endic anhydride, citraconic anhydride, and 1-butene-3,4-dicarboxylic anhydride. Two or more of these may be used simultaneously. Among them, maleic anhydride and itaconic anhydride are suitably used.

The introduction amount of the reactive functional group of the copolymer (B1) is preferably 0.1 to 20 parts by weight, more preferably 0.1 to 10 parts by weight, and still more preferably 0.5 to 3 parts by weight with respect to 100 parts by weight of the copolymer (B1). By setting the introduction amount of the reactive functional group to 0.1 parts by weight or more, the reactivity with the polyamide resin (A) can be enhanced. On the other hand, when the amount of the reactive functional group is more than 20 parts by weight, the reaction between the polyamide resin (A) and the copolymer (B1) excessively proceeds, and the high-temperature rigidity of the thermoplastic elastomer composition is reduced.

The copolymer (B2) used in the present invention is a copolymer, which is different from component (B1), containing a polymer block mainly composed of an aromatic vinyl compound and a polymer block mainly composed of a conjugated diene compound and/or a hydrogenated compound thereof. That is, the copolymer is a copolymer having no reactive functional group containing a polymer block mainly composed of an aromatic vinyl compound and a polymer block mainly composed of a conjugated diene compound and/or a hydrogenated compound thereof.

The aromatic vinyl compound in the copolymer (B2) is preferably the same as the aromatic vinyl compound described above in the copolymer (B1).

The polymer block mainly composed of a conjugated diene compound and/or the hydrogenated compound thereof in the copolymer (B2) is preferably the same as the polymer block mainly composed of a conjugated diene compound and/or the hydrogenated compound thereof described above in the copolymer (B1).

The structure of the block copolymer (B2) of the present invention is not particularly limited as long as it includes a polymer block mainly composed of an aromatic vinyl compound and a polymer block mainly composed of a conjugated diene compound and/or a hydrogenated compound thereof, and for example, any of linear, branched, and star-shaped configurations can be selected.

The ratio of the polymer block mainly composed of an aromatic vinyl compound and the polymer block mainly composed of a conjugated diene compound constituting the copolymer (B2) is not particularly limited, but from the viewpoint of loss tangent, the content of the polymer block mainly composed of an aromatic vinyl compound in the copolymer (B2) is preferably 10 to 70 wt%. When the content of the polymer block mainly composed of an aromatic vinyl compound is 10 wt% or more, sufficient mechanical properties are exhibited, and when the content thereof is 70 wt% or less, the loss tangent can be increased.

The molecular weight of the copolymer (B2) is not particularly limited, but from the viewpoint of molding processability, fluidity, elastomeric properties, and the like, the molecular weight in terms of weight-average molecular weight by GPC measurement is preferably 5,000 to 400,000 and more preferably 10,000 to 200,000, and when the weight-average molecular weight is 5,000 or more, sufficient mechanical properties are exhibited; on the other hand, when the weight-average molecular weight is 400,000 or less, processability and fluidity of a molded article are excellent.

In the present invention, a compound corresponding to both the component (B1) and the component (B2) and having a reactive functional group is regarded as the component (B1).

The blending amounts of the polyamide resin (A) and the thermoplastic elastomer (B) contained in the thermoplastic elastomer composition of the present invention are preferably such that the ratio (weight ratio) (A) : (B) of the polyamide resin (A) and the thermoplastic elastomer (B) is 40 : 60 to 90 : 10. When the thermoplastic elastomer (B) is more than the ratio of (A) : (B) = 40 : 60, it is difficult for the polyamide resin to exhibit high-temperature rigidity, and the high-temperature rigidity of the thermoplastic elastomer composition is reduced. On the other hand, when the thermoplastic elastomer (B) is less than the ratio of (A) : (B) = 90 : 10, the loss tangent of the thermoplastic elastomer composition is low, and it is difficult to impart vibration damping properties. (A) : (B) is more preferably 40 : 60 to 85 : 15 and still more preferably 40 : 60 to 80 : 20.

The thermoplastic elastomer composition of the present invention has a loss tangent of 0.10 or more at a frequency of 100 Hz and a temperature of 23°C and a melting point of 200°C or more by differential scanning calorimetry (DSC).

By setting the loss tangent at a frequency of 100 Hz and a temperature of 23°C to 0.10 or more, vibration damping properties and sound-absorbing properties can be imparted to a molded article formed of the thermoplastic elastomer composition.

The loss tangent at a frequency of 100 Hz and a temperature of 23°C can be determined by the following method. A strip-shaped molded article is prepared as described later using the thermoplastic elastomer composition of the present invention. The molded article is measured using a viscoelasticity measuring device (DMS6100 manufactured by Seiko Instruments Inc.) under the conditions of a temperature increase rate of 2°C/min and a frequency of 100 Hz in a nitrogen atmosphere to determine a storage modulus and a loss modulus. The loss tangent at a temperature of 23°C is determined by dividing the loss modulus at a temperature of 23°C by the storage modulus.

The loss tangent at a frequency of 100 Hz and a temperature of 23°C is preferably 0.15 or more and more preferably 0.18 or more.

The upper limit of the loss tangent at a frequency of 100 Hz and a temperature of 23°C is not particularly limited, but is preferably 5.0 or less from the viewpoint of maintaining the shape of a molded article.

When the melting point by differential scanning calorimetry (DSC) is 200°C or more, high-temperature rigidity can be imparted to a molded article formed of the thermoplastic elastomer composition, and the shape of the molded article can be maintained.

The melting point by DSC can be determined by the following method. First, two-point fairness (indium, lead) and baseline subtraction are performed using a differential scanning calorimeter (DSC-7 manufactured by PerkinElmer, Inc.). A sample of a thermoplastic elastomer composition in an amount of 8 to 10 mg is weighed, the sample is heated at a temperature increase rate of 20°C/min, and a melting endothermic peak observed in a heating process is defined as a melting point.

The melting point of the thermoplastic elastomer composition is preferably 205°C or more and more preferably 210°C or more.

On the other hand, the upper limit of the melting point of the thermoplastic elastomer composition is not particularly limited, but is preferably 350°C or less, more preferably 320°C or less, and still more preferably 300°C or less from the viewpoint of productivity.

The method of setting the loss tangent of the thermoplastic elastomer composition at a frequency of 100 Hz and a temperature of 23°C to 0.10 or more and the melting point thereof by differential scanning calorimetry (DSC) to 200°C or more is not particularly limited as long as such a thermoplastic elastomer composition can be obtained, but a thermoplastic elastomer composition of the following aspect is preferably used.

As a thermoplastic elastomer composition of a first aspect of the present invention, there is provided a thermoplastic elastomer composition obtained by blending a polyamide resin (A1) having a melting point of 200°C or more by differential scanning calorimetry (DSC), a copolymer (B1) having a reactive functional group containing a polymer block mainly composed of an aromatic vinyl compound and a polymer block mainly composed of a conjugated diene compound and/or a hydrogenated compound thereof, and a copolymer (B2-1), which is different from component (B1), containing a polymer block mainly composed of an aromatic vinyl compound and a polymer block mainly composed of a conjugated diene compound and/or a hydrogenated compound thereof, and having a glass transition temperature more than -20°C, in which a weight ratio of the polyamide resin (A1), the copolymer (B1), and the copolymer (B2-1) is (A1) : (B1) = 50 : 50 to 80 : 20, (B1) : (B2-1) = 90 : 10 to 25 : 75, and (A1) : ((B1) + (B2-1)) = 40 : 60 to 70 : 30.

By blending the copolymer (B1) having a reactive functional group at a specific ratio with the polyamide resin (A1) having characteristics excellent in high-temperature rigidity and molding processability, the polyamide resin (A1) and the copolymer (B1) moderately react with each other, and solubility between the polyamide resin (A1) and the copolymer (B2-1) is improved. By further blending the copolymer (B1) and the copolymer (B2-1) at a specific ratio, the copolymer (B1) and the copolymer (B2-1) act appropriately, solubility between the polyamide resin (A1) and the copolymer (B2-1) is improved, and the loss tangent of the thermoplastic elastomer composition can be improved. When the loss tangent of the thermoplastic elastomer composition is high, the thermoplastic elastomer composition is excellent in vibration damping properties. By further blending the copolymer (B2-1) having a glass transition temperature more than -20°C at a specific ratio in addition to the polyamide resin (A1) and the copolymer (B1), the loss tangent of the thermoplastic elastomer composition can be improved while maintaining the high-temperature rigidity of the polyamide resin.

The polyamide resin (A1) used in the present aspect is a polyamide resin having a melting point of 200°C or more by DSC. The polyamide resin (A1) used in the present aspect is preferably the same as the polyamide resin (A1) described above.

The copolymer (B1) used in the present aspect is preferably the same as the copolymer (B1) described above.

The glass transition temperature of the copolymer (B1) in the present aspect is not particularly limited, but is preferably more than -60°C. When the glass transition temperature of the copolymer (B1) is more than -60°C, the loss tangent of the thermoplastic elastomer composition at a frequency of 100 Hz and a temperature of 23°C can be increased.

The glass transition temperature of the copolymer (B1) is more than -60°C, preferably -30°C or more, and preferably -20°C or more.

The glass transition temperature of the copolymer (B1) can be determined by the following method. A sample kept in an absolute dry state is measured at a frequency of 100 Hz and a temperature increase rate of 2°C/min in a nitrogen atmosphere by a viscoelasticity measuring device (DMS6100 manufactured by Seiko Instruments Inc.) to determine a storage modulus and a loss modulus. The loss tangent is determined by dividing the loss modulus by the storage modulus. The temperature at a peak position of the loss tangent obtained at this time is defined as a glass transition temperature.

Examples of the method of setting the glass transition point of the copolymer (B1) in the above range include a method of adjusting the structure, the copolymerization ratio, or the like of copolymer component of the copolymer (B1).

The copolymer (B2-1) used in the present aspect is a copolymer, which is different from component (B1), containing a polymer block mainly composed of an aromatic vinyl compound and a polymer block mainly composed of a conjugated diene compound and/or a hydrogenated compound thereof. That is, the copolymer is a copolymer having no reactive functional group containing a polymer block mainly composed of an aromatic vinyl compound and a polymer block mainly composed of a conjugated diene compound and/or a hydrogenated compound thereof.

The aromatic vinyl compound in the copolymer (B2-1) is preferably the same compound as the compound described above in the copolymer (B1).

The polymer block mainly composed of a conjugated diene compound and/or the hydrogenated compound thereof in the copolymer (B2-1) is preferably the same as the polymer block mainly composed of a conjugated diene compound and/or the hydrogenated compound thereof described above in the copolymer (B1).

The structure of the block copolymer (B2-1) of the present aspect is not particularly limited as long as it includes a polymer block mainly composed of an aromatic vinyl compound and a polymer block mainly composed of a conjugated diene compound and/or a hydrogenated compound thereof, and for example, any of linear, branched, and star-shaped configurations can be selected.

The ratio of the polymer block mainly composed of an aromatic vinyl compound and the polymer block mainly composed of a conjugated diene compound constituting the copolymer (B2-1) is not particularly limited, but from the viewpoint of loss tangent, the content of the polymer block mainly composed of an aromatic vinyl compound in the copolymer (B2-1) is preferably 10 to 70 wt%. When the content of the polymer block mainly composed of an aromatic vinyl compound is 10 wt% or more, sufficient mechanical properties are exhibited, and when the content thereof is 70 wt% or less, the loss tangent can be increased.

The molecular weight of the copolymer (B2-1) is not particularly limited, but from the viewpoint of molding processability, fluidity, elastomeric properties, and the like, the molecular weight in terms of weight-average molecular weight by GPC measurement is preferably 5,000 to 400,000 and more preferably 10,000 to 200,000, and when the weight-average molecular weight is 5,000 or more, sufficient mechanical properties are exhibited; on the other hand, when the weight-average molecular weight is 400,000 or less, processability and fluidity of a molded article are excellent.

In the present aspect, a compound corresponding to both the component (B1) and the component (B2-1) and having a reactive functional group is regarded as the component (B1).

The glass transition temperature of the copolymer (B2-1) in the present aspect is more than -20°C. When the glass transition temperature of the copolymer (B2-1) is more than -20°C, the loss tangent of the thermoplastic elastomer composition at a frequency of 100 Hz and a temperature of 23°C can be increased.

The glass transition temperature of the copolymer (B2-1) is more than -20°C, preferably -15°C or more, and preferably -10°C or more.

The glass transition temperature of the copolymer (B2-1) can be determined by the following method. A sample kept in an absolute dry state is measured at a frequency of 100 Hz and a temperature increase rate of 2°C/min in a nitrogen atmosphere by a viscoelasticity measuring device (DMS6100 manufactured by Seiko Instruments Inc.) to determine a storage modulus and a loss modulus. The loss tangent is determined by dividing the loss modulus by the storage modulus. The temperature at a peak position of the loss tangent obtained at this time is defined as a glass transition temperature.

Examples of the method of setting the glass transition point of the copolymer (B2-1) in the above range include a method of adjusting the structure, the copolymerization ratio, or the like of copolymer component of the copolymer (B2-1).

As for the blending amount of the polyamide resin (A1), the copolymer (B1), and the copolymer (B2-1) contained in the thermoplastic elastomer composition of the present aspect, a ratio (weight ratio) (A1) : (B1) of the polyamide resin (A1) and the copolymer (B1) is 50 : 50 to 80 : 20, a ratio (weight ratio) (B1) : (B2-1) of the copolymer (B1) and the copolymer (B2-1) is 90 : 10 to 25 : 75, and a ratio (weight ratio) (A1) : ((B1) + (B2-1)) of the polyamide resin (A1) and a total of the copolymer (B1) and the copolymer (B2-1) is 40 : 60 to 70 : 30. When the copolymer (B1) is more than the ratio of (A1) : (B1) = 50 : 50, the reaction between the polyamide resin (A1) and the copolymer (B1) excessively proceeds, it is difficult for the polyamide resin to exhibit high-temperature rigidity, and the high-temperature rigidity of the thermoplastic elastomer composition is reduced. On the other hand, when the copolymer (B1) is less than the ratio of (A1) : (B1) = 80 : 20, the solubility between the polyamide resin (A1) and the copolymer (B2-1) is reduced. The ratio of (A1) : (B1) is 50 : 50 to 80 : 20, preferably 55 : 45 to 80 : 20, more preferably 58 : 42 to 80 : 20, and still more preferably 60 : 40 to 80 : 20. When the copolymer (B2-1) is less than the ratio of (B1) : (B2-1) = 90 : 10, an excellent loss tangent of the copolymer (B2-1) is not exhibited. On the other hand, when the copolymer (B1) is less than the ratio of (B1) : (B2-1) = 25 : 75, the reactivity between the polyamide resin (A1) and the copolymer (B1) is reduced, and the solubility with the copolymer (B2-1) is reduced, so that the loss tangent of the thermoplastic elastomer composition is decreased. The ratio of (B1): (B2-1) is in a range of 90 : 10 to 25 : 75, preferably 90 : 10 to 30 : 70, more preferably 90 : 10 to 35 : 65, and still more preferably 90 : 10 to 40 : 60. When ((B1) + (B2-1)) is more than the ratio of (A1) : ((B1) + (B2-1)) = 40 : 60, it is difficult for the polyamide resin (A1) to exhibit high-temperature rigidity, and the high-temperature rigidity of the thermoplastic elastomer composition is reduced. When ((B1) + (B2-1)) is less than the ratio of (A1) : ((B1) + (B2-1)) = 70 : 30, the loss tangent of the thermoplastic elastomer composition is low, and it is difficult to impart vibration damping properties. The ratio of (A1) : ((B1) + (B2-1)) is in a range of 40 : 60 to 70 : 30, preferably 42 : 58 to 70 : 30, more preferably 45 : 55 to 70 : 30, and still more preferably 45 : 55 to 68 : 32.

The thermoplastic elastomer composition of the present aspect preferably further contains a hydrogenated petroleum resin (C).

The hydrogenated petroleum resin (C) is a resin obtained by hydrogenating a petroleum resin solidified by an acidic catalyst without isolating an unsaturated hydrocarbon mainly from C5 and C9 fractions among the remaining fractions obtained by pyrolyzing petroleum naphtha to collect necessary fractions.

Examples of the hydrogenated petroleum resin include a hydrogenated dicyclopentadiene resin and a partially hydrogenated aromatic modified dicyclopentadiene resin which are hydrogenated resins of a C5-based petroleum resin obtained by copolymerizing C5 fractions such as pentene, isoprene, piperine, and 1,3-pentadiene produced by pyrolyzing petroleum naphtha, a hydrogenated C9 petroleum resin obtained by copolymerizing C9 fractions such as indene, vinyl toluene, and α- or β-methylstyrene produced by pyrolyzing petroleum naphtha, and a copolymerized hydrogenated petroleum resin of the C5 and C9 fractions.

Examples of commercially available products of the hydrogenated dicyclopentadiene resin include ESCOREZ (registered trademark) 5300, 5400 series manufactured by TONEX Corporation; and Eastotac (registered trademark) H series manufactured by Eastman Chemical Japan Ltd.

Examples of commercially available products of the partially hydrogenated aromatic modified dicyclopentadiene resin include ESCOREZ (registered trademark) 5600 series manufactured by TONEX Corporation.

Examples of commercially available products of the hydrogenated C9 petroleum resin include ARKON (registered trademark) P and M series manufactured by ARAKAWA CHEMICAL INDUSTRIES, LTD.; and Polystolyn manufactured by Eastman Chemical Japan Ltd.

Examples of the copolymerized hydrogenated petroleum resin of a C5 fraction and a C9 fraction include I-MARV (registered trademark) series manufactured by Idemitsu Kosan Co., Ltd. From the viewpoint of compatibility with the copolymers (B1) and (B2-1), a hydrogenated C9 petroleum resin is preferable.

The blending amount of the hydrogenated petroleum resin (C) contained in the thermoplastic elastomer composition of the present aspect is preferably 0.01 to 20 parts by weight with respect to 100 parts by weight of the total of the polyamide resin (A1), the copolymer (B1), and the copolymer (B2-1). By setting the blending amount to 0.01 parts by weight or more, the loss tangent of the thermoplastic elastomer composition at a temperature of 23°C at a measurement frequency of 100 Hz can be further increased. On the other hand, by setting the blending amount to 20 parts by weight or less, surface tuck due to bleed-out can be suppressed. The blending amount of the hydrogenated petroleum resin is preferably 0.01 to 20 parts by weight, more preferably 0.1 to 15 parts by weight, and still more preferably 1.5 to 15 parts by weight.

As a thermoplastic elastomer composition of a second aspect of the present invention, there is provided a thermoplastic elastomer composition obtained by blending a polyamide resin (A1) having a melting point of 200°C or more by differential scanning calorimetry (DSC), a copolymer (B1) having a reactive functional group containing a polymer block mainly composed of an aromatic vinyl compound and a polymer block mainly composed of a conjugated diene compound and/or a hydrogenated compound thereof, and a hydrogenated petroleum resin (C), a weight ratio of the polyamide resin (A1) and the copolymer (B1) contained in the thermoplastic elastomer composition is (A1) : (B1) = 50 : 50 to 90 : 10, and a content of the hydrogenated petroleum resin (C) is 0.01 to 20 parts by weight with respect to 100 parts by weight of a total of the polyamide resin (A1) and the copolymer (B1).

By blending the copolymer (B1) having a reactive functional group at a specific ratio with the polyamide resin (A1) having characteristics excellent in high-temperature rigidity and molding processability, the polyamide resin (A1) and the copolymer (B1) moderately react with each other, and the flexibility is improved while maintaining the high-temperature rigidity of the polyamide. By blending a specific amount of the hydrogenated petroleum resin (C), the glass transition temperature of the copolymer (B1) is shifted to a high temperature side, and the loss tangent of the softened thermoplastic elastomer composition at a frequency of 100 Hz and a temperature of 23°C can be improved. When the loss tangent of the thermoplastic elastomer composition is high, the thermoplastic elastomer composition is excellent in vibration damping properties.

The polyamide resin (A1) used in the present aspect is a polyamide resin having a melting point of 200°C or more by DSC. The polyamide resin (A1) used in the present aspect is preferably the same as the polyamide resin (A1) described above.

The copolymer (B1) used in the present aspect is preferably the same as the copolymer (B1) described above.

As for the blending amounts of the polyamide resin (A1) and the copolymer (B1) contained in the thermoplastic elastomer composition of the present aspect, the ratio (weight ratio) (A1) : (B1) of the polyamide resin (A1) and the copolymer (B1) is 50 : 50 to 90 : 10. When the copolymer (B1) is more than the ratio of (A1) : (B1) = 50 : 50, the reaction between the polyamide resin (A1) and the copolymer (B1) excessively proceeds, it is difficult for the polyamide resin to exhibit high-temperature rigidity, and the high-temperature rigidity of the thermoplastic elastomer composition is reduced. On the other hand, when the copolymer (B1) is less than the ratio of (A1) : (B1) = 90 : 10, the loss tangent of the thermoplastic elastomer composition is low, and it is difficult to impart vibration damping properties. The ratio of (A1) : (B1) is 50 : 50 to 90 : 10, preferably 55 : 45 to 90 : 10, more preferably 55 : 45 to 85 : 15, and still more preferably 60 : 40 to 85 : 15.

The thermoplastic elastomer composition of the present aspect is obtained by further blending a hydrogenated petroleum resin (C) in addition to the polyamide resin (A1) and the copolymer (B1).

The hydrogenated petroleum resin (C) is preferably the same as the hydrogenated petroleum resin (C) described above.

The content of the hydrogenated petroleum resin (C) contained in the thermoplastic elastomer composition of the present aspect is 0.01 to 20 parts by weight with respect to 100 parts by weight of the total of the polyamide resin (A1) and the copolymer (B1). When the content is less than 0.01 parts by weight, the glass transition temperature of the copolymer (B1) cannot be shifted to a high temperature side, and the loss tangent of the thermoplastic elastomer composition at a frequency of 100 Hz and a temperature of 23°C is not 0.10 or more, so that the vibration damping properties are poor. On the other hand, when the content is more than 20 parts by weight, surface tuck due to bleed-out occurs, which is not preferable. The content of the hydrogenated petroleum resins is preferably 0.01 to 15 parts by weight, more preferably 0.1 to 15 parts by weight, and still more preferably 1.5 to 15 parts by weight.

As a thermoplastic elastomer composition of a third aspect of the present invention, there is provided a thermoplastic elastomer composition obtained by blending a polyamide resin (A1) having a melting point of 200°C or more by differential scanning calorimetry (DSC), a copolymer (B1-1), which has a reactive functional group and has a glass transition temperature of -40°C or less, containing a polymer block mainly composed of an aromatic vinyl compound and a polymer block mainly composed of a conjugated diene compound and/or a hydrogenated compound thereof, a copolymer (B2-2) containing a polymer block mainly composed of an aromatic vinyl compound and a polymer block mainly composed of a conjugated diene compound and/or a hydrogenated compound thereof other than the component (B1-1), and having a glass transition temperature of -20°C or less, and a hydrogenated petroleum resin (C), a weight ratio of the polyamide resin (A1), the copolymer (B1-1), and the copolymer (B2-2) contained in the thermoplastic elastomer composition is (A1) : (B1-1) = 50 : 50 to 80 : 20, (B1-1) : (B2-2) = 90 : 10 to 25 : 75, and (A1) : ((B1-1) + (B2-2)) = 40 : 60 to 65 : 35, and a content of the hydrogenated petroleum resin (C) is 0.01 to 20 parts by weight with respect to 100 parts by weight of a total of the polyamide resin (A1), the copolymer (B1-1), and the copolymer (B2-2).

By blending the copolymer (B1-1) having a reactive functional group at a specific ratio with the polyamide resin (A1) having characteristics excellent in high-temperature rigidity and molding processability, the polyamide resin (A1) and the copolymer (B1-1) moderately react with each other, and solubility between the polyamide resin (A1) and the copolymer (B2-2) is improved. By further blending the copolymer (B1-1) and the copolymer (B2-2) at a specific ratio, the copolymer (B1-1) and the copolymer (B2-2) act appropriately, solubility between the polyamide resin (A1) and the copolymer (B2-2) is improved, and the flexibility of the thermoplastic elastomer composition can be improved while maintaining high-temperature toughness. By further blending the polyamide resin (A1) with the copolymer (B1-1) having a glass transition temperature less than a specific temperature and the copolymer (B2-2) having a glass transition temperature less than a specific temperature at a specific ratio, the flexibility of the thermoplastic elastomer composition can be improved while maintaining the high-temperature rigidity of the polyamide resin. By blending a specific amount of the hydrogenated petroleum resin (C) with respect to 100 parts by weight of the total of the polyamide resin (A1), the copolymer (B1-1), and the copolymer (B2-2), the glass transition temperature of the copolymer (B1-1) and, or the copolymer (B2-2) is shifted to a high temperature side, and the loss tangent of the thermoplastic elastomer composition at a frequency of 100 Hz and a temperature of 23°C can be improved. When the loss tangent of the thermoplastic elastomer composition is high, the thermoplastic elastomer composition is excellent in vibration damping properties.

The polyamide resin (A1) used in the present aspect is a polyamide resin having a melting point of 200°C or more by DSC. The polyamide resin (A1) used in the present aspect is preferably the same as the polyamide resin (A1) described above.

The copolymer (B1-1) used in the present aspect is a copolymer having a reactive functional group containing a polymer block mainly composed of an aromatic vinyl compound and a polymer block mainly composed of a conjugated diene compound and/or a hydrogenated compound thereof.

The reactive functional group in the copolymer (B1-1) is preferably the same as the reactive functional group described above in the copolymer (B1).

The aromatic vinyl compound in the copolymer (B1-1) is preferably the same as the compound described above in the copolymer (B1).

The polymer block mainly composed of a conjugated diene compound and/or the hydrogenated compound thereof in the copolymer (B1-1) is preferably the same as the polymer block mainly composed of a conjugated diene compound and/or the hydrogenated compound thereof described above in the copolymer (B1).

The ratio of the polymer block mainly composed of an aromatic vinyl compound and the polymer block mainly composed of a conjugated diene compound constituting the copolymer (B1-1) is not particularly limited, but from the viewpoint of loss tangent, the content of the polymer block mainly composed of an aromatic vinyl compound in the copolymer (B1-1) is preferably 10 to 70 wt%. When the content of the polymer block mainly composed of an aromatic vinyl compound is 10 wt% or more, sufficient mechanical properties are exhibited, and when the content thereof is 70 wt% or less, the loss tangent can be increased.

The molecular weight of the copolymer (B1-1) is not particularly limited, but from the viewpoint of molding processability, fluidity, elastomeric properties, and the like, the molecular weight in terms of weight-average molecular weight by GPC measurement is preferably 5,000 to 400,000 and more preferably 10,000 to 200,000, and when the weight-average molecular weight is 5,000 or more, sufficient mechanical properties are exhibited; on the other hand, when the weight-average molecular weight is 400,000 or less, processability and fluidity of a molded article are excellent.

The introduction amount of the reactive functional group of the copolymer (B1-1) is preferably 0.1 to 20 parts by weight, more preferably 0.1 to 10 parts by weight, and still more preferably 0.5 to 3 parts by weight with respect to 100 parts by weight of the copolymer (B1-1). By setting the introduction amount of the reactive functional group to 0.1 parts by weight or more, the reactivity with the polyamide resin (A) can be enhanced. On the other hand, when the amount of the reactive functional group is more than 20 parts by weight, the reaction between the polyamide resin (A) and the copolymer (B1-1) excessively proceeds, and the high-temperature rigidity of the thermoplastic elastomer composition is reduced.

The copolymer (B2-2) used in the present aspect is a copolymer containing a polymer block mainly composed of an aromatic vinyl compound and a polymer block mainly composed of a conjugated diene compound and/or a hydrogenated compound thereof other than the component (B1-1). That is, the copolymer is a copolymer having no reactive functional group containing a polymer block mainly composed of an aromatic vinyl compound and a polymer block mainly composed of a conjugated diene compound and/or a hydrogenated compound thereof.

The aromatic vinyl compound in the copolymer (B2-2) is preferably the same compound as the compound described above in the copolymer (B1).

The polymer block mainly composed of a conjugated diene compound and/or the hydrogenated compound thereof in the copolymer (B2-2) is preferably the same as the polymer block mainly composed of a conjugated diene compound and/or the hydrogenated compound thereof described above in the copolymer (B1).

The structure of the block copolymer (B2-2) of the present aspect is not particularly limited as long as it includes a polymer block mainly composed of an aromatic vinyl compound and a polymer block mainly composed of a conjugated diene compound and/or a hydrogenated compound thereof, and for example, any of linear, branched, and star-shaped configurations can be selected.

The ratio of the polymer block mainly composed of an aromatic vinyl compound and the polymer block mainly composed of a conjugated diene compound constituting the copolymer (B2-2) is not particularly limited, but from the viewpoint of loss tangent, the content of the polymer block mainly composed of an aromatic vinyl compound in the copolymer (B2-2) is preferably 10 to 70 wt%. When the content of the polymer block mainly composed of an aromatic vinyl compound is 10 wt% or more, sufficient mechanical properties are exhibited, and when the content thereof is 70 wt% or less, the loss tangent can be increased.

The molecular weight of the copolymer (B2-2) is not particularly limited, but from the viewpoint of molding processability, fluidity, elastomeric properties, and the like, the molecular weight in terms of weight-average molecular weight by GPC measurement is preferably 5,000 to 400,000 and more preferably 10,000 to 200,000, and when the weight-average molecular weight is 5,000 or more, sufficient mechanical properties are exhibited; on the other hand, when the weight-average molecular weight is 400,000 or less, processability and fluidity of a molded article are excellent.

In the present aspect, a compound corresponding to both the component (B1-1) and the component (B2-2) and having a reactive functional group is regarded as the component (B1-1).

The glass transition temperatures of the copolymer (B1-1) and the copolymer (B2-2) can be determined by the following method. A sample kept in an absolute dry state is measured at a frequency of 100 Hz and a temperature increase rate of 2°C/min in a nitrogen atmosphere by a viscoelasticity measuring device (DMS6100 manufactured by Seiko Instruments Inc.) to determine a storage modulus and a loss modulus. The loss tangent is determined by dividing the loss modulus by the storage modulus. The peak position of the loss tangent obtained at this time is defined as a glass transition temperature.

The glass transition temperature of the copolymer (B1-1) in the present aspect is -40°C or less. When the glass transition temperature is more than -40°C, the peak temperature of the loss tangent excessively moves to the high temperature side by blending the hydrogenated petroleum resin (C), and the loss tangent of the thermoplastic elastomer composition at a frequency of 100 Hz and a temperature of 23°C may be decreased. The glass transition temperature of the copolymer (B1-1) is preferably -42°C or less, more preferably -43°C or less, and still more preferably -45°C or less.

The lower limit of the glass transition temperature of the copolymer (B1-1) is not particularly limited, but is preferably -100°C or more from the viewpoint of cost.

The glass transition temperature of the copolymer (B2-2) in the present aspect is -20°C or less. When the glass transition temperature is more than -20°C, the peak temperature of the loss tangent excessively moves to the high temperature side by blending the hydrogenated petroleum resin (C), and the loss tangent of the thermoplastic elastomer composition at a frequency of 100 Hz and a temperature of 23°C may be decreased. The glass transition temperature of the copolymer (B2-2) is preferably -21°C or less, more preferably -22°C or less, and still more preferably -25°C or less.

The lower limit of the glass transition temperature of the copolymer (B2-2) is not particularly limited, but is preferably -100°C or more from the viewpoint of cost.

Examples of the method of setting the glass transition points of the copolymer (B1-1) and the copolymer (B2-2) in the above range include a method of adjusting the structures, the copolymerization ratios, or the like of copolymer components of the copolymer (B1-1) and the copolymer (B2-2).

As for the blending amount of the polyamide resin (A1), the copolymer (B1-1), and the copolymer (B2-2) contained in the thermoplastic elastomer composition of the present aspect, a ratio (weight ratio) (A1) : (B1-1) of the polyamide resin (A1) and the copolymer (B1-1) is 50 : 50 to 80 : 20, a ratio (weight ratio) (B1-1) : (B2-2) of the copolymer (B1-1) and the copolymer (B2-2) is 90 : 10 to 25 : 75, and a ratio (weight ratio) (A1) : ((B1-1) + (B2-2)) of the polyamide resin (A1) and a total of the copolymer (B1-1) and the copolymer (B2-2) is 40 : 60 to 65 : 35. When the copolymer (B1-1) is more than the ratio of (A1) : (B1-1) = 50 : 50, the reaction between the polyamide resin (A1) and the copolymer (B1-1) excessively proceeds, it is difficult for the polyamide resin to exhibit high-temperature rigidity, and the high-temperature rigidity of the thermoplastic elastomer composition is reduced. On the other hand, when the copolymer (B1-1) is less than the ratio of (A1) : (B1-1) = 80 : 20, the solubility between the polyamide resin (A1) and the copolymer (B2-2) is reduced. The ratio of (A1) : (B1-1) is 50 : 50 to 80 : 20, preferably 55 : 45 to 80 : 20, more preferably 58 : 42 to 80 : 20, and still more preferably 60 : 40 to 80 : 20. When the copolymer (B2-2) is less than the ratio of (B1-1) : (B2-2) = 90 : 10, the flexibility of the thermoplastic elastomer composition is reduced, and when the copolymer (B1-1) is less than the ratio of (B1-1) : (B2-2) = 25 : 75, the reactivity between the polyamide resin (A1) and the copolymer (B1-1) is reduced, and the high-temperature toughness is reduced. The ratio of (B1-1) : (B2-2) is 90 : 10 to 25 : 75, preferably 90 : 10 to 28 : 72, more preferably 90 : 10 to 30 : 70, and still more preferably 90 : 10 to 35 : 65. When ((B1-1) + (B2-2)) is more than the ratio of (Al) : ((B1-1) + (B2-2)) = 40 : 60, it is difficult for the polyamide resin (A1) to exhibit high-temperature rigidity, and the high-temperature rigidity of the thermoplastic elastomer composition is reduced. When ((B1-1) + (B2-2)) is less than the ratio of (A1) : ((B1-1) + (B2-2)) = 65 : 35, the loss tangent of the thermoplastic elastomer composition at a frequency of 100 Hz and a temperature of 23°C at the time of blending the hydrogenated petroleum resin (C) is reduced. The ratio of (A1) : ((B1-1) + (B2-2)) is 40 : 60 to 65 : 35, preferably 45 : 55 to 65 : 35, more preferably 50 : 50 to 65 : 35, and still more preferably 55 : 45 to 65 : 35.

The thermoplastic elastomer composition of the present aspect is obtained by further blending a hydrogenated petroleum resin (C) in addition to the polyamide resin (A1), the copolymer (B1-1), and the copolymer (B2-2).

The hydrogenated petroleum resin (C) is preferably the same as the hydrogenated petroleum resin (C) described above.

The content of the hydrogenated petroleum resin (C) contained in the thermoplastic elastomer composition of the present aspect is 0.01 to 20 parts by weight with respect to 100 parts by weight of the total of the polyamide resin (A1), the copolymer (B1-1), and the copolymer (B2-2). When the content is less than 0.01 parts by weight, the glass transition temperatures of the copolymer (B1-1) and the copolymer (B2-2) cannot be shifted to a high temperature side, and the loss tangent of the thermoplastic elastomer composition at a frequency of 100 Hz and a temperature of 23°C is not 0.10 or more, so that the vibration damping properties are poor. On the other hand, when the content is more than 20 parts by weight, surface tuck due to bleed-out occurs, which is not preferable. The content of the hydrogenated petroleum resins is preferably 0.01 to 15 parts by weight, more preferably 0.1 to 15 parts by weight, and still more preferably 1.5 to 15 parts by weight.

The thermoplastic elastomer composition of the present invention is excellent in spinnability.

The spinnability can be confirmed by the following method. A thermoplastic elastomer composition pellet is vacuum dried at 80°C for 15 hours. With the vacuum-dried pellet, the thermoplastic elastomer composition is filled in a cylinder in which a test temperature is set to 280°C using Capilograph 1C (cylinder diameter: 9.55 mm, orifice length: 10.0 mm, inner diameter: 1.0 mm) manufactured by Toyo Seiki Seisaku-sho, Ltd., and the pellet is compacted and held for 30 minutes to melt the pellet, discharged under the condition of an extrusion speed of 10 mm/min, and taken up at a take-up speed of 200 m/min to check the spinnability.

In order to have excellent spinnability, the ratio (weight ratio) of the polyamide resin (A) and the thermoplastic elastomer (B) contained in the thermoplastic elastomer composition is preferably (A) : (B) = 40 : 60 to 90 : 10, and more preferably, the thermoplastic elastomer composition is preferably any one of the thermoplastic elastomer composition of the first aspect, the thermoplastic elastomer composition of the second aspect, and the thermoplastic elastomer composition of the third aspect.

The thermoplastic elastomer composition of the present invention is excellent in sheet moldability.

The sheet moldability can be confirmed by the following method. A thermoplastic elastomer composition pellet is vacuum dried at 80°C for 15 hours. The vacuum-dried pellet is melted and kneaded by an extruder, a resin is extruded from a mold in a certain direction, and the resin is fixed to a roll to form a sheet.

In order to have excellent sheet moldability, the ratio (weight ratio) of the polyamide resin (A) and the thermoplastic elastomer (B) contained in the thermoplastic elastomer composition is preferably (A) : (B) = 40 : 60 to 90 : 10, and more preferably, the thermoplastic elastomer composition is preferably any one of the thermoplastic elastomer composition of the first aspect, the thermoplastic elastomer composition of the second aspect, and the thermoplastic elastomer composition of the third aspect.

In the thermoplastic elastomer composition of the present invention, 0 to 100 parts by weight of other components, which are other than the above components, may be blended with respect to 100 parts by weight of the total of the polyamide resin (A) and the thermoplastic elastomer (B) as long as the properties thereof are not impaired. Examples of the other components include fillers, copper compounds, potassium compounds, thermoplastic resins other than the component (A), and various additives.

For example, the filler is blended, whereby a molded article having improved strength and dimensional stability can be provided. The shape of the filler may be fibrous or non-fibrous, and a fibrous filler and a non-fibrous filler may be used in combination. Examples of the fibrous fillers include glass fibers, glass middle fibers, carbon fibers, potassium titanate whiskers, zinc oxide whiskers, aluminum nitrate whiskers, aramid fibers, alumina fibers, silicon carbide fibers, ceramic fibers, asbestos fibers, gypsum fibers, and metal fibers. Examples of the non-fibrous fillers include silicates such as wollastonite, zeolite, sericite, kaolin, mica, pyrophyllite, bentonite, asbestos, and alumina silicate; metal oxides such as alumina, magnesium oxide, zirconium oxide, titanium oxide, and iron oxide; metal carbonates such as calcium carbonate, magnesium carbonate, and dolomite; metal sulfates such as calcium sulfate and barium sulfate; metal hydroxides such as magnesium hydroxide, calcium hydroxide, and aluminum hydroxide; and glass beads, ceramic beads, boron nitride, and silicon carbide. These fillers may be hollow. It is preferable to pretreat these fibrous fillers and/or non-fibrous fillers with a coupling agent for use from the viewpoint of obtaining more excellent mechanical properties. Examples of the coupling agent include isocyanate compounds, organic silane compounds, organic titanate compounds, organic borane compounds, and epoxy compounds.

Examples of the copper compounds include copper chloride, copper bromide, copper iodide, copper acetate, copper acetylacetonate, copper carbonate, copper borofluoride, copper citrate, copper hydroxide, copper nitrate, copper sulfate, and copper oxalate. Two or more of these may be contained as the copper compounds. Among these copper compounds, those industrially available are preferable, and copper halide is suitable. Examples of the copper halide include copper iodide, cuprous bromide, cupric bromide, and cuprous chloride. The copper compound is more preferably copper iodide.

Examples of the potassium compounds include potassium iodide, potassium bromide, potassium chloride, potassium fluoride, potassium acetate, potassium hydroxide, potassium carbonate, and potassium nitrate. Two or more of these may be contained as the potassium compounds. Among these potassium compounds, potassium iodide is preferable. By containing a potassium compound, the surface appearance, weather resistance, and mold corrosion resistance of a molded article can be improved.

The potassium compound is considered to have an effect of promoting the reaction between the copper compound and the polyamide resin (A) by using the copper compound and the potassium compound in combination in order to suppress the release and precipitation of copper.

Examples of the thermoplastic resins include polyamide resins other than the polyamide resin (A), polyester resins, polyphenylene sulfide resins, polyphenylene oxide resins, polycarbonate resins, polylactic resins, polyacetal resins, polysulfone resins, polytetrafluoroethylene resins, polyetherimide resins, polyamide-imide resins, polyimide resins, polyethersulfone resins, polyether ketone resins, polythioether ketone resins, polyether ether ketone resins, styrene resins such as polystyrene resins and ABS resins, and polyalkylene oxide resins. Two or more of these thermoplastic resins may be blended. When a thermoplastic resin other than the polyamide resin (A) is blended, the content thereof is preferably 5 parts by weight or less with respect to 100 parts by weight of the polyamide resin (A).

Examples of the various additives include anti-coloring agents, antioxidants such as hindered phenols and hindered amines, release agents such as ethylene bisstearyl amides and higher fatty acid esters, plasticizers, heat stabilizers, lubricants, ultraviolet absorbers, coloring agents, flame retardants, and blowing agents.

Next, a method for producing the thermoplastic elastomer composition of the present invention will be described. Examples of the method for producing the thermoplastic elastomer composition of the present invention include a method of collectively kneading the polyamide resin (A), the thermoplastic elastomer (B), and as necessary, other components, and a method of blending and kneading some of the polyamide resin (A) and the thermoplastic elastomer (B), and as necessary, other components from a side feed during melt-kneading. As a kneading apparatus, for example, a known kneading apparatus such as a Banbury mixer, a roll, or an extruder can be employed. When other components such as various additives are blended in the thermoplastic elastomer composition of the present invention, these components can be blended at any stage. For example, when the thermoplastic elastomer composition of the present invention is produced by a twin-screw extruder, examples of the producing method include a method of simultaneously blending other components when the polyamide resin (A) and the thermoplastic elastomer (B) are blended, and a method of blending other components by a method such as side feeding during melt-kneading of the polyamide resin (A) and the thermoplastic elastomer (B).

The thermoplastic elastomer composition of the present invention can be molded by any method to obtain a molded article having any shape. Examples of the molding method include extrusion molding, injection molding, hollow molding, calender molding, compression molding, vacuum molding, foam molding, blow molding, and rotation molding. Examples of the molded shape include a pellet shape, a plate shape, a fibrous shape, a strand shape, a film or sheet shape, a pipe shape, a hollow shape, and a box shape.

The thermoplastic elastomer composition of the present invention can be foam-molded. As a foam molding method, chemical foaming or physical foaming is used. Examples of the chemical foaming include a method in which a foaming agent for foaming a thermoplastic elastomer composition is added when a thermoplastic elastomer composition is melt-kneaded, melt-kneading is performed, and then molding is performed, and a method in which a foaming agent for foaming a thermoplastic elastomer composition is dry-blended with the thermoplastic elastomer composition of the present invention before molding and molding is performed. Examples of the physical foaming include a batch-type method in which a thermoplastic elastomer composition molded in an autoclave is impregnated with a supercritical gas and foamed, and a continuous method in which a thermoplastic elastomer composition is impregnated with a supercritical gas and foamed when being melt-kneaded. Physical foaming is preferable from the viewpoint of productivity and quality.

The supercritical gas used in physical foaming is not particularly limited as long as it can be dissolved in the thermoplastic elastomer composition and is inert, but carbon dioxide or nitrogen is preferable from the viewpoint of safety and cost. The supercritical gas is preferably used in an amount of 0.01 to 20 parts by weight, more preferably 0.05 to 10 parts by weight, with respect to 100 parts by weight of the thermoplastic elastomer composition.

By foam molding, for example, a foamed injection molded article or a foam sheet can be obtained. Since the obtained molded article or sheet has a high loss tangent, it can be suitably used as a vibration damping material, a sound-absorbing material, or the like.

Since the molded article of the present invention is excellent in vibration damping properties, high-temperature rigidity, and blocking resistance, the molded article can be developed for, for example, automobile use applications, electric and electronic use applications, and the like, and particularly, the molded article can be suitably used as a vibration damping material or a sound-absorbing material.

### EXAMPLES

Hereinafter, effects of the present invention will be more specifically described with reference to Examples. It should be noted that the present invention is not limited to the following Examples. Evaluations in Examples and Comparative Examples were conducted by the following methods.

### (1) Melting point of polyamide resin

The melting point of the polyamide resin used in each of Examples and Comparative Examples was determined by DSC. First, two-point calibration (indium, lead) and baseline subtraction were performed using a differential scanning calorimeter (DSC-7 manufactured by PerkinElmer, Inc.). A polyamide resin in an amount of 8 to 10 mg was weighed and heated at a temperature increase rate of 20°C/min, and a melting endothermic peak temperature observed in a heating step was defined as a melting point.

### (2) Glass transition temperatures of copolymer (B1-1), copolymer (B2-1), and copolymer (B2-2)

The glass transition temperatures of the copolymer (B1-1), the copolymer (B2-1), and the copolymer (B2-2) used in each of Examples and Comparative Examples were determined by viscoelasticity measurement. First, using the copolymer (B1-1), the copolymer (B2-1), and the copolymer (B2-2) kept in an absolute dry state, a flat plate of 80 mm × 80 mm × 1 mmt was prepared in the same manner as in Examples described later. A strip of 40 mm × 8 mm × 1 mmt was cut out from the flat plate and used as a measurement sample. The measurement sample was measured using a viscoelasticity measuring device (DMS6100 manufactured by Seiko Instruments Inc.) under the conditions of a frequency of 100 Hz and a temperature increase rate of 2°C/min in a nitrogen atmosphere to determine a storage modulus and a loss modulus. The loss tangent was determined by dividing the loss modulus by the storage modulus. The peak temperature of the obtained loss tangent was defined as the glass transition temperature.

### (3) High-temperature rigidity: melting point

The high-temperature rigidity was evaluated on the basis of the melting point. The melting point of the thermoplastic elastomer composition pellet obtained in each of Examples and Comparative Examples was determined by DSC measurement. First, two-point calibration (indium, lead) and baseline subtraction were performed using a differential scanning calorimeter (DSC-7 manufactured by PerkinElmer, Inc.). A thermoplastic elastomer composition in an amount of 8 to 10 mg was weighed and heated at a temperature increase rate of 20°C/min, and a melting endothermic peak temperature observed in a heating step was defined as a melting point. When the thermoplastic elastomer composition has a melting point of 200°C or more, high-temperature rigidity can be imparted to a molded article, and the shape of the molded article can be maintained.

### (4) Vibration damping properties: loss tangent (tanδ)

A strip of 40 mm × 8 mm × 1 mmt was cut out from a flat plate of 80 mm × 80 mm × 1 mmt of the thermoplastic elastomer composition obtained in each of Examples and Comparative Examples. Using the cut-out strip as a measurement sample, measurement was performed by a viscoelasticity measuring device (DMS6100 manufactured by Seiko Instruments Inc.) under the conditions of a frequency of 100 Hz and a temperature increase rate of 2°C/min in a nitrogen atmosphere to determine a storage modulus and a loss modulus. The loss tangent (tanδ) at a temperature of 23°C was determined by dividing the loss modulus at a temperature of 23°C by the storage modulus.

### (5) Productivity: blocking

The pellet obtained in each of Examples and Comparative Examples was vacuum dried at 80°C for 15 hours. Sticking (blocking) between the pellets at that time was confirmed.

### (6) Spinnability: high-speed take-up properties

The thermoplastic elastomer composition pellet obtained in each of Examples and Comparative Examples was vacuum dried at 80°C for 15 hours. With the vacuum-dried pellet, the thermoplastic elastomer composition was filled in a cylinder in which a test temperature was set to 280°C using Capilograph 1C (cylinder diameter: 9.55 mm, orifice length: 10.0 mm, inner diameter: 1.0 mm) manufactured by Toyo Seiki Seisaku-sho, Ltd., and the pellet was compacted and held for 30 minutes to melt the pellet and discharged under the condition of an extrusion speed of 10 mm/min, and the thread-like thermoplastic elastomer composition was taken up at a take-up speed of 200 m/min. At this time, one from which the thermoplastic elastomer composition had been taken up was determined to be good (spinnability was good), and one from which the thermoplastic elastomer composition had not been taken up was determined to be poor (spinnability was not good).

### (7) Sheet moldability

The thermoplastic elastomer composition pellet obtained in each of Examples and Comparative Examples was vacuum dried at 80°C for 15 hours. The vacuum-dried thermoplastic elastomer composition pellet was melted and kneaded by an extruder, a resin was extruded from a mold in a certain direction, and the resin was fixed to a roll to form a sheet. One that could form a sheet was determined to be good (sheet moldability was good), and one that could not form a sheet was determined to be poor (sheet moldability was not good).

Raw materials used in Examples and Comparative Examples and abbreviations thereof will be described below.

### [SEBS-3]

In a nitrogen-substituted reaction container, 700 parts by weight of cyclohexane, 7.5 parts by weight of styrene, and 0.07 parts by weight of sec-butyllithium were added based on 100 parts by weight of the total amount of all monomers, and then first-stage polymerization was performed at a polymerization initiation temperature of 50°C, and after completion of the reaction, 85 parts by weight of 1,3-butadiene was added at a temperature of 70°C, and then second-stage polymerization was performed adiabatically. After 30 minutes, 7.5 parts by weight of styrene was added, and third-stage polymerization was performed. After the reaction, methanol was added to stop the polymerization. The total amount of all monomers refers to the total amount of all monomers added at each stage of a polymerization step. After the reaction, the reaction liquid was returned to normal temperature and normal pressure, taken out from the reaction container, stirred and charged into water, and then the solvent was removed by steam distillation to obtain a conjugated diene polymer 1. Cyclopentadienyl titanium dichloride was added to the obtained conjugated diene polymer 1 so that the amount of titanium atoms was 50 ppm with respect to the weight of the polymer, and triethyl aluminum was further added three times the molar amount of titanium. A hydrogenation reaction was performed at a hydrogen pressure of 1 MPa and a temperature of 75°C for one hour to obtain SEBS-3. The glass transition temperature of the obtained SEBS-3 was measured and found to be -15°C. (Copolymer corresponding to copolymer (B2) and copolymer (B2-1))

### [SEBS-g-MAH-2]

To 100 parts by weight of the obtained SEBS-3, 1.4 parts by weight of maleic anhydride, 0.15 parts by weight of PERHEXA 25B (manufactured by NOF CORPORATION, 2,5-dimethyl-2,5-di(t-butylperoxy)hexane), and 0.1 parts by weight of Irgafos P168 (manufactured by BASF, tris(2,4-di-tert-butylphenyl) phosphite) were dry-blended, and supplied to a twin-screw extruder (TEX30XSSST, manufactured by JSW) (L/D = 45.5 (wherein L is a length from a raw material supply port to a discharge port, and D is a diameter of a screw) set at a cylinder temperature of 230°C and melt-kneaded, and maleic anhydride was graft-added to SEBS-3 to obtain SEBS-g-MAH-2.

The obtained SEBS-g-MAH-2 was extracted and purified with acetone, and after drying, the addition amount of maleic anhydride was determined by titration with sodium methylate, and 1.3 wt% of maleic anhydride was added. The glass transition temperature of the obtained SEBS-g-MAH-2 was measured and found to be -15°C. (Copolymer corresponding to copolymer (B1))
PA6: Polyamide 6 resin "AMILAN" (registered trademark) manufactured by TORAY INDUSTRIES, INC. (relative viscosity of 2.70 at a melting point of 224°C and a resin concentration of 0.01 g/ml in 98% concentrated sulfuric acid solution at 25°C) (polyamide corresponding to the polyamide resin (A1))
PA12: Polyamide 12 resin "DAIAMID" (registered trademark) manufactured by Daicel-Evonik Corporation (melting point: 178°C) (polyamide corresponding to the polyamide resin (A1))
SEBS-g-MAH-1: Maleic anhydride-modified styrene-ethylene-butylene-styrene block copolymer "Kraton" (registered trademark) FG1924 manufactured by Kraton Polymer Japan Co., Ltd. (styrene content: 13.9%, acid-modified amount: 1.0 wt%, Tg = -55°C) (copolymer corresponding to the copolymer (B1) and the copolymer (B1-1))
SEBS-g-MAH-2: Maleic anhydride-modified styrene-ethylene-butylene-styrene block copolymer produced in [SEBS-g-MAH-2] (styrene content: 15%, acid-modified amount: 1.3 wt%, Tg = -15°C) (copolymer corresponding to the copolymer (B1)) SEBS-1: Styrene-ethylene-butylene-styrene block copolymer "S.O.E" (registered trademark) S1606 manufactured by Asahi Kasei Corporation (Tg = -10°C) (copolymer corresponding to the copolymer (B2) and the copolymer (B2-1))
SEBS-2: Styrene-ethylene-butylene-styrene block copolymer "TUFTEC" (registered trademark) H1052 manufactured by Asahi Kasei Corporation (Tg = -44°C) (copolymer corresponding to the copolymer (B2) and the copolymer (B2-2))
SEBS-3: Styrene-ethylene-butylene-styrene block copolymer produced in [SEBS-3] (styrene content: 15%, Tg = -15°C) (copolymer corresponding to the copolymer (B2) and the copolymer (B2-1))
SEBS-4: Styrene-ethylene-butylene-styrene block copolymer "Kraton" (registered trademark) G1645VO manufactured by Kraton Polymer Japan Co., Ltd. (styrene content: 13%, Tg = -25°C) (copolymer corresponding to the copolymer (B2) and the copolymer (B2-2))
SIS: Styrene-isoprene-propylene-styrene block copolymer "Kraton" (registered trademark) D1161 manufactured by Kraton Polymer Japan Co., Ltd. (styrene content: 15%, Tg = -50°C) (copolymer corresponding to the copolymer (B2) and the copolymer (B2-2))
SBS: Styrene-butadiene-styrene copolymer "Kraton" (registered trademark) D1102 manufactured by Kraton Polymer Japan Co., Ltd. (styrene content: 29%, Tg = -90°C) (copolymer corresponding to the copolymer (B2) and the copolymer (B2-2))
SEPS: Styrene-ethylene-propylene-styrene block copolymer "Kraton" (registered trademark) G1730 manufactured by Kraton Polymer Japan Co., Ltd. (styrene content: 20%, Tg = -45°C) (copolymer corresponding to the copolymer (B2) and the copolymer (B2-2))
Hydrogenated petroleum resin: hydrogenated C9 petroleum resin "ARKON" P-140 (ARAKAWA CHEMICAL INDUSTRIES, LTD.) (resin corresponding to the hydrogenated petroleum resin (C)).

### [Examples 1 to 9 and Comparative Examples 1 to 6]

Raw materials shown in Tables 1 and 2 were supplied into a twin-screw extruder (TEX30XSSST, manufactured by JSW) (L/D = 45.5 (wherein L is a length from a raw material supply port to a discharge port, and D is a diameter of a screw) having a cylinder temperature set to 250°C, a screw arrangement including two kneading zones, and a screw speed of 250 rpm, and melt-kneaded. A gut discharged through a die of the twin-screw extruder was rapidly cooled by being passed through a cooling bath filled with water adjusted to 10°C over 15 seconds to fix the structure, and then pelletized with a strand cutter to obtain a pellet of the thermoplastic elastomer composition. The obtained pellet was molded into a flat plate of 80 mm × 80 mm × 1 mmt by using an injection molding machine (SE-75DUZ-C250) manufactured by Sumitomo Heavy Industries, Ltd. under molding conditions of a mold temperature of 80°C, an injection speed of 40 mm/sec, and a cooling time of 60 seconds. The temperature of the injection molding machine was set to 240°C-245°C-250°C-250°C from the bottom to the tip of the hopper. The results of evaluating the obtained pellet or molded article according to the above-described method were shown in Tables 1 and 2.

It has been found that the thermoplastic elastomer compositions of Examples 1 to 9 are the thermoplastic elastomer composition of the first aspect, have a loss tangent of 0.10 or more at a frequency of 100 Hz and a temperature of 23°C and a melting point of 200°C or more by differential scanning calorimetry (DSC), and are excellent in vibration damping properties, high-temperature rigidity, and blocking resistance and also excellent in spinnability and moldability such as sheet moldability.

**[Table 1]**

| | | | Example | | | | | | | | |
|---|---|---|---|---|---|---|---|---|---|---|---|
| | | | 1 | 2 | 3 | 4 | 5 | 6 | 7 | 8 | 9 |
| Composition | PA6 | Parts by weight | 60 | 50 | 40 | 60 | 60 | 40 | 60 | 40 | 60 |
| | PA12 | Parts by weight | | | | | | | | | |
| | SEBS-g-MAH-1 | Parts by weight | 20 | 25 | 15 | 35 | 35 | 15 | | | 20 |
| | SEBS-g-MAH-2 | Parts by weight | | | | | | | 20 | 35 | |
| | SEBS-1 | Parts by weight | 20 | 25 | 45 | 5 | 5 | 45 | 20 | 25 | |
| | SEBS-2 | Parts by weight | | | | | | | | | |
| | SEBS-3 | Parts by weight | | | | | | | | | 20 |
| | P-140 | Parts by weight | | | | | 10 | 5 | | | |
| Evaluation results | Melting point | °C | 219 | 215 | 217 | 214 | 211 | 215 | 220 | 215 | 220 |
| | tanδ | - | 0.17 | 0.22 | 0.31 | 0.11 | 0.41 | 0.68 | 0.39 | 0.71 | 0.22 |
| | Blocking | - | No | No | No | No | No | No | No | No | No |
| | High-speed take-up properties | - | Good | Good | Good | Good | Good | Good | Good | Good | Good |
| | Sheet moldability | - | Good | Good | Good | Good | Good | Good | Good | Good | Good |

**[Table 2]**

| | | | Comparative Example | | | | | |
|---|---|---|---|---|---|---|---|---|
| | | | 1 | 2 | 3 | 4 | 5 | 6 |
| Composition | PA6 | Parts by weight | | 50 | 80 | 10 | 50 | 80 |
| | PA12 | Parts by weight | 50 | | | | | |
| | SEBS-g-MAH-1 | Parts by weight | 25 | 25 | 10 | 45 | 10 | 20 |
| | SEBS-g-MAH-2 | Parts by weight | | | | | | |
| | SEBS-1 | Parts by weight | 25 | | 10 | 45 | 40 | |
| | SEBS-2 | Parts by weight | | 25 | | | | |
| | SEBS-3 | Parts by weight | | | | | | |
| | P-140 | Parts by weight | | | | | | |
| Evaluation results | Melting point | °C | 160 | 221 | 221 | 132 | 219 | 222 |
| | tanδ | - | 0.02 | 0.05 | 0.01 | 1.21 | 0.04 | 0.01 |
| | Blocking | - | Yes | No | No | Yes | Yes | No |
| | High-speed take-up properties | - | Poor | Poor | Good | Poor | Poor | Good |
| | Sheet moldability | - | Poor | Good | Good | Poor | Poor | Good |

### [Examples 10 to 14 and Comparative Examples 7 to 11]

Raw materials shown in Tables 3 and 4 were supplied into a twin-screw extruder (TEX30XSSST, manufactured by JSW) (L/D = 45.5 (wherein L is a length from a raw material supply port to a discharge port, and D is a diameter of a screw) having a cylinder temperature set to 250°C, a screw arrangement including two kneading zones, and a screw speed of 250 rpm, and melt-kneaded. A gut discharged through a die of the twin-screw extruder was rapidly cooled by being passed through a cooling bath filled with water adjusted to 10°C over 15 seconds to fix the structure, and then pelletized with a strand cutter to obtain a pellet of the thermoplastic elastomer composition. The obtained pellet was molded into a flat plate of 80 mm × 80 mm × 1 mmt by using an injection molding machine (SE-75DUZ-C250) manufactured by Sumitomo Heavy Industries, Ltd. under molding conditions of a mold temperature of 80°C, an injection speed of 40 mm/sec, and a cooling time of 60 seconds. The temperature of the injection molding machine was set to 240°C-245°C-250°C-250°C from the bottom to the tip of the hopper. The results of evaluating the obtained pellet or molded article according to the above-described method were shown in Tables 3 and 4.

It has been found that the thermoplastic elastomer compositions of Examples 10 to 14 are the thermoplastic elastomer composition of the second aspect, have a loss tangent of 0.10 or more at a frequency of 100 Hz and a temperature of 23°C and a melting point of 200°C or more by differential scanning calorimetry (DSC), and are excellent in vibration damping properties, high-temperature rigidity, and blocking resistance and also excellent in spinnability and moldability such as sheet moldability.

**[Table 3]**

| | | | Example | | | | |
|---|---|---|---|---|---|---|---|
| | | | 10 | 11 | 12 | 13 | 14 |
| Composition | PA6 | Parts by weight | 50 | 75 | 90 | 60 | 60 |
| | PA12 | Parts by weight | | | | | |
| | SEBS-g-MAH-1 | Parts by weight | 50 | 25 | 10 | 40 | 40 |
| | P-140 | Parts by weight | 10 | 10 | 10 | 5 | 20 |
| Evaluation results | Melting point | °C | 210 | 218 | 221 | 214 | 211 |
| | tanδ | - | 0.49 | 0.32 | 0.19 | 0.35 | 0.41 |
| | Blocking properties | - | No | No | No | No | No |
| | High-speed take-up properties | - | Good | Good | Good | Good | Good |
| | Sheet moldability | - | Good | Good | Good | Good | Good |

**[Table 4]**

| | | | Comparative Example | | | | |
|---|---|---|---|---|---|---|---|
| | | | 7 | 8 | 9 | 10 | 11 |
| Composition | PA6 | Parts by weight | 100 | 30 | | 60 | 60 |
| | PA12 | Parts by weight | | | 75 | | |
| | SEBS-g-MAH-1 | Parts by weight | | 70 | 25 | 40 | 40 |
| | P-140 | Parts by weight | 10 | 10 | 10 | 0.001 | 40 |
| Evaluation results | Melting point | °C | 222 | 121 | 164 | 217 | 201 |
| | tanδ | - | 0.01 | 0.12 | 0.05 | 0.03 | 0.08 |
| | Blocking properties | - | No | Yes | Yes | No | Yes |
| | High-speed take-up properties | - | Good | Poor | Poor | Good | Poor |
| | Sheet moldability | - | Good | Poor | Poor | Good | Poor |

### [Examples 15 to 19 and Comparative Examples 12 to 16]

Raw materials shown in Tables 5 and 6 were supplied into a twin-screw extruder (TEX30XSSST, manufactured by JSW) (L/D = 45.5 (wherein L is a length from a raw material supply port to a discharge port, and D is a diameter of a screw) having a cylinder temperature set to 250°C, a screw arrangement including two kneading zones, and a screw speed of 250 rpm, and melt-kneaded. A gut discharged through a die of the twin-screw extruder was rapidly cooled by being passed through a cooling bath filled with water adjusted to 10°C over 15 seconds to fix the structure, and then pelletized with a strand cutter to obtain a pellet of the thermoplastic elastomer composition. The obtained pellet was molded into a flat plate of 80 mm × 80 mm × 1 mmt by using an injection molding machine (SE-75DUZ-C250) manufactured by Sumitomo Heavy Industries, Ltd. under molding conditions of a mold temperature of 80°C, an injection speed of 40 mm/sec, and a cooling time of 60 seconds. The temperature of the injection molding machine was set to 240°C-245°C-250°C-250°C from the bottom to the tip of the hopper. The results of evaluating the obtained pellet or molded article according to the above-described method were shown in Tables 5 and 6.

It has been found that the thermoplastic elastomer compositions of Examples 15 to 19 are the thermoplastic elastomer composition of the third aspect, have a loss tangent of 0.10 or more at a frequency of 100 Hz and a temperature of 23°C and a melting point of 200°C or more by differential scanning calorimetry (DSC), and are excellent in vibration damping properties, high-temperature rigidity, and blocking resistance and also excellent in spinnability and moldability such as sheet moldability.

**[Table 5]**

| | | | Example | | | | |
|---|---|---|---|---|---|---|---|
| | | | 15 | 16 | 17 | 18 | 19 |
| Composition | PA6 | Parts by weight | 50 | 50 | 50 | 50 | 50 |
| | PA12 | Parts by weight | | | | | |
| | SEBS-g-MAH-1 | Parts by weight | 25 | 25 | 25 | 25 | 20 |
| | SIS | Parts by weight | 25 | | | | |
| | SBS | Parts by weight | | 25 | | | |
| | SEPS | Parts by weight | | | 25 | | |
| | SEBS-4 | Parts by weight | | | | 25 | 30 |
| | P-140 | Parts by weight | 10 | 10 | 10 | 10 | 5 |
| Evaluation results | Melting point | °C | 217 | 219 | 219 | 218 | 218 |
| | tanδ | - | 0.22 | 0.11 | 0.24 | 0.31 | 0.27 |
| | Blocking properties | - | No | No | No | No | No |
| | High-speed take-up properties | - | Good | Good | Good | Good | Good |
| | Sheet moldability | - | Good | Good | Good | Good | Good |

**[Table 6]**

| | | | Comparative Example | | | | |
|---|---|---|---|---|---|---|---|
| | | | 12 | 13 | 14 | 15 | 16 |
| Composition | PA6 | Parts by weight | | 70 | 15 | 15 | 80 |
| | PA12 | Parts by weight | 50 | | | | |
| | SEBS-g-MAH-1 | Parts by weight | 25 | 15 | 15 | 70 | 20 |
| | SIS | Parts by weight | | | | | |
| | SBS | Parts by weight | | | | | |
| | SEPS | Parts by weight | | | | | |
| | SEBS-4 | Parts by weight | 25 | 15 | 70 | 15 | |
| | P-140 | Parts by weight | 10 | 10 | 10 | 10 | |
| Evaluation results | Melting point | °C | 160 | 221 | 109 | 106 | 222 |
| | tanδ | - | 0.03 | 0.04 | 0.91 | 0.84 | 0.01 |
| | Blocking properties | - | Yes | No | Yes | Yes | No |
| | High-speed take-up properties | - | Poor | Good | Poor | Poor | Good |
| | Sheet moldability | - | Poor | Good | Poor | Poor | Good |

### INDUSTRIAL APPLICABILITY

A molded article formed of the thermoplastic elastomer composition of the present invention is excellent in vibration damping properties, high-temperature rigidity, and blocking resistance, and can be more easily produced. The thermoplastic elastomer composition of the present invention can be widely used for various molded articles such as a sound-absorbing material and a vibration damping material by taking advantage of these characteristics, and can be suitably used particularly for automobile use applications, electric and electronic use applications, consumer use applications, and the like.

## Claims

1. A thermoplastic elastomer composition comprising a polyamide resin (A) and a thermoplastic elastomer (B) blended, wherein the thermoplastic elastomer composition has a loss tangent of 0.10 or more at a frequency of 100 Hz and a temperature of 23°C, and a melting point of 200°C or more by differential scanning calorimetry (DSC).

2. The thermoplastic elastomer composition according to claim 1, wherein a weight ratio of the polyamide resin (A) and the thermoplastic elastomer (B) contained in the thermoplastic elastomer composition is (A) : (B) = 40 : 60 to 90 : 10.

3. The thermoplastic elastomer composition according to claim 1, wherein the polyamide resin (A) is a polyamide resin (A1) having a melting point of 200°C or more by differential scanning calorimetry (DSC).

4. The thermoplastic elastomer composition according to claim 1, wherein the thermoplastic elastomer (B) is at least one selected from a copolymer (B1) having a reactive functional group containing a polymer block mainly composed of an aromatic vinyl compound and a polymer block mainly composed of a conjugated diene compound and/or a hydrogenated compound thereof and a copolymer (B2), which is different from component (B1), containing a polymer block mainly composed of an aromatic vinyl compound and a polymer block mainly composed of a conjugated diene compound and/or a hydrogenated compound thereof.

5. The thermoplastic elastomer composition according to claim 1, wherein the thermoplastic elastomer composition is a thermoplastic elastomer composition obtained by blending a polyamide resin (A1) having a melting point of 200°C or more by differential scanning calorimetry (DSC), a copolymer (B1) having a reactive functional group containing a polymer block mainly composed of an aromatic vinyl compound and a polymer block mainly composed of a conjugated diene compound and/or a hydrogenated compound thereof, and a copolymer (B2-1), which is different from component (B1), containing a polymer block mainly composed of an aromatic vinyl compound and a polymer block mainly composed of a conjugated diene compound and/or a hydrogenated compound thereof, and having a glass transition temperature more than -20°C, and a weight ratio of the polyamide resin (A1), the copolymer (B1), and the copolymer (B2-1) contained in the thermoplastic elastomer composition is (A1) : (B1) = 50 : 50 to 80 : 20, (B1) : (B2-1) = 90 : 10 to 25 : 75, and (A1) : ((B1) + (B2-1)) = 40 : 60 to 70 : 30.

6. The thermoplastic elastomer composition according to claim 5, further comprising a hydrogenated petroleum resin (C), wherein a content of the hydrogenated petroleum resin (C) is 0.01 to 20 parts by weight with respect to 100 parts by weight of a total of the polyamide resin (A1), the copolymer (B1), and the copolymer (B2-1).

7. The thermoplastic elastomer composition according to claim 1, wherein the thermoplastic elastomer composition is a thermoplastic elastomer composition obtained by blending a polyamide resin (A1) having a melting point of 200°C or more by differential scanning calorimetry (DSC), a copolymer (B1) having a reactive functional group containing a polymer block mainly composed of an aromatic vinyl compound and a polymer block mainly composed of a conjugated diene compound and/or a hydrogenated compound thereof, and a hydrogenated petroleum resin (C), a weight ratio of the polyamide resin (A1) and the copolymer (B1) contained in the thermoplastic elastomer composition is (A1) : (B1) = 50 : 50 to 90 : 10, and a content of the hydrogenated petroleum resin (C) is 0.01 to 20 parts by weight with respect to 100 parts by weight of a total of the polyamide resin (A1) and the copolymer (B1).

8. The thermoplastic elastomer composition according to claim 1, wherein the thermoplastic elastomer composition is a thermoplastic elastomer composition obtained by blending a polyamide resin (A1) having a melting point of 200°C or more by differential scanning calorimetry (DSC), a copolymer (B1-1), which has a reactive functional group and has a glass transition temperature of -40°C or less, containing a polymer block mainly composed of an aromatic vinyl compound and a polymer block mainly composed of a conjugated diene compound and/or a hydrogenated compound thereof, a copolymer (B2-2) containing a polymer block mainly composed of an aromatic vinyl compound and a polymer block mainly composed of a conjugated diene compound and/or a hydrogenated compound thereof other than the component (B1-1), and having a glass transition temperature of -20°C or less, and a hydrogenated petroleum resin (C), a weight ratio of the polyamide resin (A1), the copolymer (B1-1), and the copolymer (B2-2) is (A1) : (B1-1) = 50 : 50 to 80 : 20, (B1-1) : (B2-2) = 90 : 10 to 25 : 75, and (A1) : ((B1-1) + (B2-2)) = 40 : 60 to 65 : 35, and a content of the hydrogenated petroleum resin (C) is 0.01 to 20 parts by weight with respect to 100 parts by weight of a total of the polyamide resin (A1), the copolymer (B1-1), and the copolymer (B2-2).

9. The thermoplastic elastomer composition according to any one of claims 4 to 8, wherein the polymer block mainly composed of a conjugated diene compound and/or the hydrogenated compound thereof is a polymer block derived from at least one selected from isoprene, butadiene, ethylene-butylene, and ethylene-propylene.

10. A molded article comprising the thermoplastic elastomer composition according to claim 1.

11. The molded article according to claim 10, which is a sound-absorbing material.

12. The molded article according to claim 10, which is a vibration damping material.

13. The molded article according to claim 10, wherein the molded article is a molded article selected from an injection molded article, a fiber, a sheet, a foamed injection molded article, and a foam sheet.
